# EUROPÄISCHE PATENTSCHRIFT

(11) **EP 4 313 564 B1**
(45) Veröffentlichungstag und Bekanntmachung des Hinweises auf die Patenterteilung: **10.12.2025**
(21) Anmeldenummer: 22718170.8
(22) Anmeldetag: 25.03.2022
(51) Int. Cl.: B29C 70/52, B29C 35/08

(54) **WERKZEUG FÜR DIE HERSTELLUNG EINES HALBZEUGS AUS EINEM PULTRUDAT MITTELS PULTRUSION, VERWENDUNG EINES WERKZEUGES FÜR DIE HERSTELLUNG EINES HALBZEUGS AUS EINEM PULTRUDAT MITTELS PULTRUSION UND VERFAHREN ZUR HERSTELLUNG EINES HALBZEUGS AUS EINEM PULTRUDAT MITTELS PULTRUSION**
MOLD FOR THE PRODUCTION OF A SEMIFINISHED PRODUCT FROM A PULTRUDATE BY MEANS OF PULTRUSION, USE OF A MOLD FOR THE PRODUCTION OF A SEMIFINISHED PRODUCT FROM A PULTRUDATE BY MEANS OF PULTRUSION, AND METHOD OF PRODUCING A SEMIFINISHED PRODUCT FROM A PULTRUDATE BY MEANS OF PULTRUSION
MOULE POUR LA PRODUCTION D'UN PRODUIT SEMI-FINI À PARTIR D'UN PULTRUDAT PAR PULTRUSION, UTILISATION D'UN MOULE POUR LA PRODUCTION D'UN PRODUIT SEMI-FINI À PARTIR D'UN PULTRUDAT PAR PULTRUSION, ET MÉTHODE DE PRODUCTION D'UN PRODUIT SEMI-FINI À PARTIR D'UN PULTRUDAT PAR PULTRUSION

(30) Priorität: 29.03.2021 DE 102021203089
(43) Veröffentlichungstag der Anmeldung: 07.02.2024
(73) Patentinhaber: Karlsruher Institut für Technologie, 76131 Karlsruhe (DE)
(72) Erfinder: ENGLER, Moritz, 76137 Karlsruhe (DE); LINK, Guido, 75045 Walzbachtal (DE); JELONNEK, John, 89079 Ulm (DE)
(74) Vertreter: Müller-Boré & Partner Patentanwälte PartG mbB
(86) Internationale Anmeldenummer: PCT/EP2022/057859
(87) Internationale Veröffentlichungsnummer: WO 2022/207473

(56) Entgegenhaltungen:
- US-A- 5 470 423
- US-A1- 2015 224 683

## Beschreibung

Die vorliegende Erfindung betrifft ein Werkzeug für die Herstellung eines Halbzeugs aus einem Pultrudat mittels Pultrusion, eine Verwendung eines Werkzeuges für die Herstellung eines Halbzeugs aus einem Pultrudat mittels Pultrusion und ein Verfahren zur Herstellung eines Halbzeugs aus einem Pultrudat mittels Pultrusion.

Bei herkömmlichen Pultrusionswerkzeugen wird das Werkzeug mit Heizelementen auf die nötige Temperatur geheizt, um das Pultrudat, zum Beispiel einen in ein Kunstharz getauchten Kohlenstofffaserstrang, auszuhärten und mit einem durch das Werkzeug vorgegebenen Profil zu versehen. Da derartige Werkzeuge thermisch sehr träge sind und lange Abkühlphasen haben, ist es nicht möglich, den Aushärtungsgrad des Pultrudats im Prozess auf kurzen Strecken zu variieren, wodurch ferner eine nachträgliche Umformung des ausgehärteten Pultrudats unmöglich wird. Der Einsatz von Mikrowellen in speziellen Pultrusionswerkzeugen erlaubt einen schnelleren und damit effizienteren Aushärteprozess, wodurch das Werkzeug, welches aus einem für Mikrowellen transparenten Material besteht, selbst nicht geheizt wird und kalt bleibt. Alle bisher bekannten Werkzeuge mit einer Mikrowellenheizung sind auf möglichst lange und möglichst gleichmäßige Heizbereiche optimiert, in denen durch Ein- und Ausschalten der Mikrowellenheizung der Aushärtungsgrad zwar gesteuert werden kann, die Übergangsbereiche von voll ausgehärtet zu nicht ausgehärtet hier aber entsprechend unscharf sind. Somit erschweren diese Übergangsbereiche ein nachträgliches, genaues Verformen oder Umformen des Pultrudats.

Ferner beschreibt die Druckschrift US 5 470 423 A eine Mikrowellen-Pultrusionsvorrichtung mit einem Rahmen mit Fingern, die das zu verarbeitende Material berühren. Der Rahmen und die Finger verhindern ein Austreten der Mikrowellen aus dem Hohlraum und können für verschiedene Materialien und Düsenquerschnitte ausgetauscht oder modifiziert werden. Das Gerät weist ferner eine bewegbare Platte in dem Hohlraum auf.

Es ist daher Aufgabe der vorliegenden Erfindung die Herstellung eines Halbzeugs aus einem Pultrudat mittels Pultrusion derart zu verbessern, dass der Aushärtungsgrad des Pultrudats gezielter eingestellt werden kann und nachträgliche Umformungen des Pultrudats vereinfacht werden.

Diese Aufgabe wird durch die unabhängigen Ansprüche gelöst. Bevorzugte Ausführungsformen ergeben sich aus den jeweiligen abhängigen Ansprüchen.

Ein erfindungsgemäßer Aspekt betrifft ein Werkzeug für die Herstellung eines Halbzeugs aus einem Pultrudat mittels Pultrusion, umfassend:
einen Hohlleiter zur Leitung elektromagnetischer Mikrowellen, wobei das Pultrudat in einer Pultrusionsrichtung in den Hohlleiter einführbar ist, und
zumindest ein Feldverformungselement zum Verformen der elektrischen Feldverteilung der Mikrowellen in dem Hohlleiter,
wobei das zumindest eine Feldverformungselement die elektrische Feldverteilung der Mikrowellen in dem Hohlleiter derart verformt, dass die Leistung der Mikrowellen in einem von dem Pultrudat in der Pultrusionsrichtung durchquerbaren Raumbereich im Inneren des Hohlleiters intensiviert wird.

Durch das Heizen eines Pultrudats mit Mikrowellen in bisher bekannten, mikrowellengeigneten Werkzeugen, entstehen beim zeitweisen Ein- und Ausschalten der Mikrowelle nicht scharf bestimmbare Bereiche vergleichbar zur Wellenlänge der Mikrowellen. In diesen Bereichen variiert der Aushärtungsgrad des Pultrudats entlang des Pultrudats von 0% bis zum angestrebten Aushärtegrad. Aufgrund dieser unscharfen Übergänge ist ein weiteres oder nachträgliches präzises Umformen bzw.

Verformen des Pultrudats schwierig. Vorteilhafterweise wird durch die Erfindung der Heizbereich der Mikrowellen, auf den sich die Leistung der Mikrowellen beschränkt, bzw. der Bereich, in dem das Pultrudat ausgehärtet wird, auf Bereiche, die deutlich kleiner als die Wellenlänge sind, verkürzt. Der Heiz- bzw. Aushärtebereich wird auf einen sehr kleinen Raumbereich begrenzt. Hierdurch lässt sich der Aushärtungsgrad entlang des Pultrudats genau und Übergänge mit unterschiedlichem Aushärtegraden präzise einstellen und eine nachträgliche Verformung oder Umformung des Pultrudats kann ermöglicht werden. Dies ist insbesondere deshalb möglich, weil die Aushärtung in einem sehr kleinen Längenabschnitt entlang des Pultrudats passiert. So ist der Aushärtungsgrad entlang des Pultrudats präzise vorbestimmbar und kann für eine anschließende präzisere Umformung oder Verformung eingestellt werden. Durch das erfindungsgemäße Werkzeug kann das Pultrudat entlang seiner Längenausdehnungsrichtung mit einem lokal hohen Aushärtungsgradienten versehen werden. Ferner können voneinander scharf getrennte Längenabschnitte des Pultrudats mit gleichen und/oder verschiedenen Aushärtungsgraden erzeugt werden.

Die Erfindung ermöglicht es, die Herstellung eines Halbzeugs aus einem Pultrudat mittels Pultrusion derart zu verbessern, dass der Aushärtungsgrad des Pultrudats gezielter eingestellt werden kann und insbesondere Übergänge von voll ausgehärteten zu nicht ausgehärteten Bereichen schärfer eingestellt werden können und nachträgliche Umformungen des Pultrudats vereinfacht werden.

Im Folgenden kann das Werkzeug auch als "Applikator" bezeichnet werden.

Das herzustellende Halbzeug kann zum Beispiel ein Leichtbauteil für die Automobilindustrie, Luft- und Raumfahrt, den Bau oder für Sportgeräte sein. Es kann zum Beispiel eine Radspeiche, ein Fachwerkträger oder eine Betonarmierung sein. Als "Pultrudat" wird im Rahmen dieser Beschreibung das Material bezeichnet, das mittels Pultrusion und mit dem erfindungsgemäßen Werkzeug bearbeitet oder verarbeitet wird.

Das Pultrudat kann ein mit einem flüssigen Kunstharz durchtränkter Faserstrang sein. Der Faserstrang kann zum Beispiel Kohlenstofffasern und/oder Glasfasern umfassen oder aus Kohlenstofffasern und/oder Glasfasern bestehen. Ferner kann der Faserstrang zusätzlich oder alternativ Naturfasern und/oder Keramikfasern umfassen. Der Faserstrang kann auch aus einem Gemisch aus Kohlenstofffasern und/oder Glasfasern und/oder Naturfasern und/oder Keramikfasern sein.

Im Rahmen dieser Beschreibung bezieht sich der Begriff "Pultrusionsrichtung" auf die Raumrichtung, in der das Pultrudat während des Pultrusionsprozesses das erfindungsgemäße Werkzeug durchquert oder durchläuft. Die Pultrusionsrichtung kann zum Beispiel eine der drei Raumrichtungen eines dreidimensionalen kartesischen Koordinatensystems (x, y, z) sein. Die Pultrusionsrichtung kann zum Beispiel parallel zur x-Richtung des dreidimensionalen kartesischen Koordinatensystems sein. Die Pultrusionsrichtung kann ferner parallel zu zumindest einer der Innenwände des Hohlleiters verlaufen.

Der Hohlleiter kann ein Hohlraumwellenleiter oder ein Mikrowellenhohlraumresonator sein. Der Hohlleiter kann eine Eingangsöffnung, über die das Pultrudat in das Werkzeug zur Herstellung des Halbzeugs eingeführt werden kann, und eine Ausgangsöffnung, über die das gehärtete Pultrudat oder das Pultrudat mit einem bestimmten Aushärtungsgrad herausgeführt werden kann, aufweisen. Die Eingangs-und die Ausgangsöffnung können gegenüberliegend voneinander an dem Hohlleiter angeordnet sein. Die Eingangsöffnung kann derart ausgebildet sein, dass das Pultrudat beim Passieren der Eingangsöffnung mit einem der Eingangsöffnung entsprechenden Profil versehen wird. Die Ausgangsöffnung kann derart ausgestaltet sein, dass das Pultrudat, das den Hohlleiter über die Ausgangsöffnung verlässt weiter oder nachträglich verformt wird. Zum Beispiel kann die Ausgangsöffnung einen Stempel aufweisen oder der Stempel kann an der Ausgangsöffnung angeordnet sein. Durch den Stempel kann das nichtvollständig ausgehärtete Pultrudat, das das Werkzeug verlässt, nachträglich umgeformt oder verformt werden.

Ein vollständig ausgehärtetes Pultrudat kann nicht mehr verformt werden.

Der Hohlleiter kann eine weitere Öffnung aufweisen, über die Mikrowellen in den Hohlleiter eingeleitet werden können. Der Hohlleiter kann auch ein für Mikrowellen transmissives Fenster aufweisen, über das Mikrowellen in das Innere des Hohlleiters eingeleitet werden können. Der Hohlleiter kann ferner eine Mikrowellenquelle umfassen, durch die Mikrowellen in den Hohlleiter eingebracht bzw. eingeleitet werden können. Der Hohlleiter kann teilweise oder vollständig mit Luft, Kunststoff oder Keramik gefüllt sein. Der Hohlleiter muss nicht gasdicht sein. Der Hohlleiter kann zum Beispiel einen standardisierten Hohlleiterflansch oder einen Koax-Stecker aufweisen.

Durch den Hohlleiter können eingeleitete Mikrowellen derart im Inneren des Hohlleiters reflektiert werden, dass eine stehende Welle in Bezug auf die elektrische Feldverteilung der Mikrowellen im Inneren des Hohlleiters entsteht. Zum Beispiel können Mikrowellen über die obengenannte Öffnung oder das Fenster an einer Seite des Hohlleiters in den Hohlleiter eingeleitet werden und in Ausbreitungsrichtung der Mikrowellen an der gegenüberliegenden Seite reflektiert werden, sodass eine stehende Welle erzeugt wird, wenn der Abstand zwischen den gegenüberliegenden Seiten des Hohlleiters im Wesentlichen die Hälfte der Wellenlänge der eingeleiteten Mikrowellen beträgt oder ein Vielfaches davon.

Die Frequenz der eingeleiteten Mikrowellen kann zum Beispiel 915 MHz oder 2,45 GHz oder 5,8 GHz betragen. Der Hohlleiter ist vorzugsweise quaderförmig. Entsprechend kann der Hohlleiter eine rechteckige Innenfläche in einem Längsschnitt entlang der Pultrusionsrichtung von etwa 247,65 mm Länge mal etwa 123,83 mm Höhe oder etwa 86,36 mm Länge mal etwa 43,18 mm Höhe oder etwa 40,39 mm Länge mal etwa 20,2 mm Höhe aufweisen. Vorteilhafterweise können die Modenzusammensetzung und die Feldverteilung gut vorhergesagt werden, wenn die Hohlleiterabmessungen nur leicht von den vorgenannten Abmessungen abweichen. Die Länge und/oder die Höhe kann/können jeweils um wenige Prozent, beispielsweise und weniger als 10%, bevorzugt weniger als 5%, besonders bevorzugt um weniger als 2% von den oben angegebenen Werten abweichen. Die Innenmaße des Hohlleiters können um 0,1 mm abweichen. Sie können Toleranzen im 0,1 mm Bereich haben.

Der Hohlleiter kann auch zylindrisch oder polygonal sein. Der Hohlleiter kann jede Art von Wellenleitergeometrie haben, solange die Mikrowellen mit der gegebenen Frequenz im Hohlleiter ausbreitungsfähig sind. Die obengenannten Maße sind standardisierte Maße für drei unterschiedliche ISM Frequenzbänder, die kommerziell erhältlich sind. Für den Zweck der Erfindung können diese Maße aber über Bereiche von mehr als 10% veränderbar sein. Auch ist die Wahl anderer Frequenzen und entsprechend anderer Wellenleitergeometrien möglich. Die Hohlleitergeometrie kann an standardisierte Frequenzbereiche bzw. -bänder angepasst sein.

Vorteilhafterweise kann ein Maximum der stehenden Welle verwendet werden, um einen durch die Ausdehnung des Maximums der stehenden Welle bestimmten Längenabschnitt des Pultrudats zu erhitzen. Anders gesagt kann das Maximum der stehenden Welle derart lokalisiert sein, dass ein durch die Ausdehnung des Maximums der stehenden Welle bestimmter Längenabschnitt des Pultrudats erhitzt werden kann.

Im Rahmen dieser Beschreibung bezieht sich der Ausdruck "die elektrische Feldverteilung der Mikrowellen im Inneren des Hohlleiters" auf die elektrische Feldverteilung der Mikrowellen des Hohlleiters im ungestörten Zustand der Mikrowellen, das heißt den Zustand ohne die Anwesenheit eines Elements, das die elektromagnetischen Eigenschaften des Hohlleiters verändert, wie zum Beispiel das zumindest eine Feldverformungselement.

Durch das Vorsehen des zumindest einen Feldverformungselements kann die elektrische Feldverteilung der Mikrowellen beeinflusst werden, sodass sich die Leistung der Mikrowellen zum Erhitzen des Pultrudats auf einen durch das zumindest eine Feldverformungselement bestimmten Raumbereich beschränkt. Mit anderen Worten wird die elektrische Feldverteilung der Mikrowellen im Hohlleiter durch die Anwesenheit des zumindest einen Feldverformungselements so deformiert, dass sich im Wesentlichen der überwiegende Teil der elektrischen Feldverteilung zumindest in Pultrusionsrichtung, und damit die Leistung der Mikrowellen, in einem Raumbereich konzentriert. Die elektromagnetischen Eigenschaften des zumindest einen Feldverformungselements verändern die elektrische Feldverteilung der Mikrowellen im Hohlleiter zumindest in Pultrusionsrichtung. Anders gesagt kann das zumindest eine Feldverformungselement die elektrische Feldverteilung der Mikrowellen im Hohlleiter derart verformen, dass sich die Leistung der Mikrowellen zumindest in Pultrusionsrichtung auf einen Raumbereich konzentriert oder dass die Leistung der Mikrowellen zumindest in Pultrusionsrichtung auf einen Raumbereich fokussiert wird. Das zumindest eine Feldverformungselement kann die elektrische Feldverteilung aber auch so verformen, dass sich die Leistung der Mikrowellen auf einen Raumbereich in Pultrusionsrichtung und quer zur Pultrusionsrichtung konzentriert.

Das zumindest eine Feldverformungselement kann die elektrische Feldverteilung derart verformen, dass die Feldstärke der Mikrowellen in dem Raumbereich überhöht werden kann, wobei insbesondere die Leistung der Mikrowellen im Wesentlichen in Pultrusionsrichtung auf den Raumbereich konzentriert werden kann. "Im Wesentlichen in Pulstrusionsrichtung" bedeutet - wie auch schon oben beschrieben -, dass sich die Leistung überwiegend in Pultrusionsrichtung konzentriert und quer zur Pultrusionsrichtung eher "verschmiert" ist. Die Leistung kann aber auch in Pultrusionsrichtung und quer zur Pultrusionsrichtung konzentriert werden.

Der Raumbereich kann ein Volumenabschnitt des Pultrudats sein. Das zumindest eine Feldverformungselement kann ferner bewirken, dass die Cutoff-Frequenz des Hohlleiters reduziert wird. Unter Cutoff-Frequenz ist diejenige Frequenz zu verstehen, ab der sich die Mikrowellen im Hohlleiter ausbreiten können. Die Cutoff-Frequenz wird durch den Querschnitt des zumindest einen Feldverformungselements bestimmt. Das zumindest eine Feldverformungselement kann zum Beispiel als Stift ausgebildet sein. In dieser Ausführungsform wird die Cutoff-Frequenz insgesamt nicht verändert.

Intensivieren der Leistung in einem Raumbereich kann im Sinne der Erfindung einschließen, dass sich die Leistung in dem Raumbereich konzentriert oder dass die Leistung in dem Raumbereich fokussiert wird. Das zumindest eine Feldverformungselement kann zumindest ein Fokussierelement sein.

Das zumindest eine Feldverformungselement kann an dem Hohlleiter angeordnet sein. Es kann insbesondere innerhalb oder im Inneren des Hohlleiters angeordnet sein. Es kann zum Beispiel derart an dem Hohlleiter angeordnet sein, dass es in das Innere des Hohlleiters vorspringt. Das zumindest eine Feldverformungselement kann an einer Innenseite des Hohlleiters angeordnet sein und von dieser Innenseite vorspringen. Außerdem kann sich das zumindest eine Feldverformungselement quer zu der Pultrusionsrichtung und/oder zu der Ausbreitungsrichtung der Mikrowellen im Hohlleiter erstrecken. Das Feldverformungselement kann auch ein Fokussierelement sein, das die Leistung der Mikrowellen im Hohlleiter auf einen Raumbereich zumindest in Pultrusionsrichtung fokussiert. Die Leistung kann zusätzlich quer zur Pultrusionsrichtung fokussiert werden. Die Leistung kann sogar in einem Punkt fokussiert werden.

Vorzugsweise ist das zumindest eine Feldverformungselement stiftförmig oder stegförmig ausgebildet.

Das zumindest eine Feldverformungselement kann die elektrische Feldverteilung der eingeleiteten Mikrowellen im Hohlleiter ferner derart verformen, dass die Leistung der Mikrowellen in einem im Wesentlichen scharf begrenzten Raumbereich, der von dem Pultrudat während des Pultrusionsprozesses durchquert oder durchlaufen wird, konzentriert wird. "Im Wesentlichen scharf begrenzt" bedeutet hier, dass die Grenzen des Raumbereichs in Abhängigkeit der durch das zumindest eine Feldverformungselement verformten elektrischen Feldverteilung der Mikrowellen etwas verschmiert sein können. Die Grenzen sind umso schärfer, je spitzer die verformte elektrische Feldverteilung der Mikrowellen an dem gewünschten Raumbereich zuläuft. Dementsprechend können die Grenzen des Raumbereichs oder des Fokussierbereichs zum Beispiel durch die Halbwertsbreite eines Maximums der verformten elektrischen Feldverteilung bestimmt sein.

Hierdurch kann ein einzelner Längenabschnitt des Pultrudats erhitzt werden, im Wesentlichen ohne andere Bereiche des Pultrudats aufzuheizen oder weiter zu erhitzen. Es kann aber auch ein einzelner Volumenabschnitt des Pultrudats erhitzt werden, im Wesentlichen ohne andere Bereiche des Pultrudats aufzuheizen oder weiter zu erhitzen. Es können vorteilhafterweise Längenabschnitte von gerade einmal 5 mm bis 20 mm erhitzt werden.

Das zumindest eine Feldverformungselement kann zum Beispiel die elektrische Feldverteilung derart verformen, dass die Feldstärke der Mikrowellen in dem gewünschten Raumbereich überhöht wird. Die Überhöhung der Feldstärke ist hierbei eine Folge von elektrischen Kanteneffekten, die durch das zumindest eine Feldverformungselement induziert werden.

Das Werkzeug kann eine beliebige Anzahl von Feldverformungselementen umfassen.

Vorzugsweise weist das Werkzeug genau zwei Feldverformungselemente auf. Diese zwei Feldverformungselemente können senkrecht beabstandet zur Pultrusionsrichtung voneinander im Inneren des Hohlleiters angeordnet sein. Sie können so angeordnet sein, dass das Pultrudat während der Pultrusion zwischen den zwei Feldverformungselementen hindurchläuft.

Hierdurch kann die elektrische Leistung der Mikrowellen noch stärker auf den Raumbereich konzentriert werden und die elektrische Feldverteilung der Mikrowellen derart deformiert werden, dass sie noch spitzer im gewünschten Raumbereich zuläuft.

Erfindungsgemäß liegt der Raumbereich im Inneren des Hohlleiters. Der Raumbereich kann ein in Bezug auf die räumliche Verteilung der Mikrowellenleistung scharf begrenzter Raumbereich sein. Der Raumbereich kann einem Längenabschnitt des Pultrudats entsprechen, der die Länge eines Bruchteils der Wellenlänge der Mikrowellen haben kann. Der Raumbereich kann ein Längenabschnitt des Pultrudats sein. Der Raumbereich hat bei einer Frequenz von 2,45 GHz vorzugsweise eine Länge und/oder Breite bzw. eine Ausdehnung in Pultrusionsrichtung von 5 mm bis 20 mm. Der Raumbereich kann auch eine Ausdehnung in Pultrusionsrichtung kleiner als 5 mm, zum Beispiel von 1 mm bis 2 mm, haben. Die Längenausdehnung des Raumbereichs kann auch größer als 20 mm sein.

Vorzugsweise ist das Material, aus dem der Hohlleiter und/oder das zumindest eine Feldverformungselement geformt ist, Metall, insbesondere Aluminium oder Messing oder Stahl, oder das Material umfasst Metall, insbesondere Aluminium oder Messing oder Stahl.

Hierdurch kann eine ideale Wellenleiteigenschaft bzw. Resonatoreigenschaft des Hohlleiters bewerkstelligt werden. Außerdem weist das Feldverformungselement so eine ideale Feldverformungseigenschaft auf. Mit anderen Worten kann Metall die Kanteneffekte, die zu einer Überhöhung der elektrischen Feldstärke führen, erhöhen und so die elektrische Feldverteilung der Mikrowellen in dem Hohlleiter beeinflussen.

Gemäß einer bevorzugten Ausführungsform kann das Werkzeug ferner ein Formelement zur Profilformung des Halbzeugs umfassen, wobei das Formelement zumindest in einem Teilbereich des Hohlleiters angeordnet sein kann.

Vorteilhafterweise dient das Formelement der Formgebung des Profils des Halbzeugs und verhindert das Ablagern von nicht ausgehärtetem Pultrudat in dem Hohlleiter. Anders gesagt verhindert das Formelement das Ablagern von Pultrudatmaterial, wie zum Beispiel dem flüssigen Kunstharz, im Inneren des Hohlleiters. Das Ablagern kann zum Beispiel durch Heruntertropfen des flüssigen Kunstharzes von dem Faserstrang geschehen.

Das Formelement kann dazu ausgelegt sein, das Pultrudat durch den Hohlleiter hindurch, insbesondere durch den obengenannten Raumbereich, zu führen und zu formen.

Das Material, aus dem das Formelement geformt ist, ist vorzugsweise Keramik, insbesondere Glaskeramik, wie zum Beispiel Macor, Aluminiumoxid und/oder Zirkonoxid, oder umfasst Keramik, insbesondere Glaskeramik, Aluminiumoxid und/oder Zirkonoxid.

Vorteilhafterweise ist dieses Material elektrisch isolierend und beeinflusst nur minimal die Ausbreitung von Mikrowellen. Außerdem ist das Formelement aus derartigem Material widerstandsfähiger gegenüber Verschleiß, der von abrasiven Kräften des Pultrudats, insbesondere des Faserstrangs, auf das Formelement herrührt.

Das Formelement ist vorzugsweise einteilig ausgebildet. Es kann auch mehrteilig ausgebildet sein. Das Formelement kann verschiedene Materialien umfassen oder aus verschiedenen Materialien bestehen. Das Formelement ist vorzugsweise elektrisch nichtleitend. Es kann auch mit Abschnitten aus elektrisch leitenden Materialien kombiniert werden. Ein leitfähiges Formelement ist zumindest an einer Stelle unterbrochen, um eine Einkopplung der Mikrowellen zu ermöglichen.

Durch ein einteiliges Formelement kann jedoch sichergestellt werden, dass keine Übergangsstellen im Werkzeug auftreten, an denen das Pultrudat beschädigt werden könnte. Es kann sichergestellt werden, dass keine Übergangsstellen vorhanden sind, an denen insbesondere der Faserstrang des Pultrudats brechen oder reißen könnte.

Das Formelement ist vorzugsweise innerhalb des Hohlleiters angeordnet. Es kann vollständig im Inneren des Hohlleiters angeordnet sein. Es kann sich von einer Innenseite des Hohlleiters zu einer gegenüberliegenden Innenseite des Hohlleiters erstrecken. Es kann sich aber auch von einer Außenseite des Hohlleiters zu einer gegenüberliegenden Außenseite des Hohlleiters hin erstrecken. Ferner kann der Hohlleiter Ausnehmungen aufweisen, um das Formelement aufzunehmen. Das Formelement kann in den Hohlleiter eingesetzt werden.

Auch das Formelement kann Ausnehmungen aufweisen, über die das zumindest eine Feldverformungselement aufgenommen werden kann. So kann das zumindest eine Feldverformungselement zum Beispiel in das Formelement hineinragen.

Des Weiteren kann das Formelement den Hohlleiter ausfüllen. Das Formelement kann den Hohlleiter insbesondere vollständig ausfüllen.

Vorteilhafterweise reduziert das Formelement die Cutoff-Frequenz des Hohlleiters weiter. In einem Hohlleiter, der mit dem Formelement vollständig gefüllt ist, liegt die Cutoff-Frequenz sogar noch niedriger, wodurch das Werkzeug kompakter gebaut werden kann. Durch eine kompaktere Bauweise kann der Heizbereich, in dem das Pultrudat durch die Leistung der Mikrowellen erhitzt wird, also der Raumbereich, auf den sich die Leistung der Mikrowellen konzentriert, verkleinert werden.

Gemäß einer weiteren bevorzugten Ausführungsform kann das Werkzeug ferner zumindest ein Anpasselement zum Anpassen der elektrischen Feldverteilung der Mikrowellen im Inneren des Hohlleiters an eine Veränderung der dielektrischen Eigenschaften im Inneren des Hohlleiters umfassen.

Durch das Einbringen des Pultrudats in den Hohlleiter können sich die dielektrischen Eigenschaften im Hohlleiter verändern. Durch das zumindest eine Anpasselement lässt sich die durch das zumindest eine Feldverformungselement verformte elektrische Feldverteilung der Mikrowellen im Hohlleiter an die dielektrischen Eigenschaften des Pultrudats anpassen und das Leistungsmaximum der verformten elektrischen Feldverteilung kann nachjustiert werden. Durch das zumindest eine Anpasselement kann die Leistung der Mikrowellen insbesondere weiter auf den Raumbereich, der durch die Leistung der Mikrowellen erhitzt werden soll, fokussiert werden.

Vorteilhafterweise ist es durch das Vorsehen des zumindest einen Anpasselements ferner möglich, das Werkzeug schnell und einfach auf verschiedene dielektrische Gegebenheiten anzupassen, ohne die Hohlleiter Geometrie und/oder Abmessung zu verändern. So kann ein Werkzeug für verschiedene Pultrudate und/oder Formelemente verwendet werden.

Weiter vorteilhafterweise ist es durch das Vorsehen des zumindest einen Anpasselements ferner möglich, Fertigungstoleranzen auszugleichen oder das Werkzeug mit Mikrowellen verschiedener Frequenzen zu betreiben.

Das zumindest eine Anpasselement kann an dem Hohlleiter angeordnet sein. Es kann insbesondere innerhalb oder im Inneren des Hohlleiters angeordnet sein. Das zumindest eine Anpasselement kann beweglich und/oder verschiebbar angeordnet sein. Es kann quer zur Pultrusionsrichtung verschiebbar sein. Das zumindest eine Anpasselement kann ein ebenes, metallisches Plättchen oder ein Metallstift sein.

Vorzugsweise ist das zumindest eine Anpasselement ein beweglicher Kurzschluss, durch den die elektrische Feldverteilung der Mikrowellen auf den gewünschten Raumbereich abgestimmt, insbesondere verschoben, werden kann.

Das Werkzeug kann eine beliebige Anzahl an Anpasselementen aufweisen. Vorzugsweise weist das Werkzeug genau ein oder genau drei Anpasselemente auf.

In den vorbeschriebenen Ausführungsformen ist die Pultrusionsrichtung bevorzugt quer, insbesondere orthogonal, zu der Ausbreitungsrichtung der Mikrowellen in dem Hohlleiter.

Dies ermöglicht es, dass eine gute Eindringtiefe der Mikrowellen in das Pultrudat erreicht wird, auch wenn das Pultrudat einen Faserstrang aus besonders leitfähigen Fasern, wie zum Beispiel Kohlenstofffasern, enthält.

Gemäß einer weiteren bevorzugten Ausführungsform kann das zumindest eine Feldverformungselement koaxial zu dem Hohlleiter angeordnet sein, wobei das zumindest eine Feldverformungselement entlang der Pultrusionsrichtung elektrisch leitend ist. Das Feldverformungselement kann einen runden oder polygonalen, insbesondere achteckigen, Querschnitt haben.

Wegen des Vorhandenseins der TEM-Mode im Hohlleiter in dieser Ausführungsform, können die Abmessungen der Komponenten des Werkzeugs beliebig sein.

In dieser Ausführungsform kann das zumindest eine Feldverformungselement ein elektrischer Innenleiter sein, wobei der Hohlleiter ein koaxialer Außenleiter sein kann. Durch die koaxiale Anordnung des zumindest einen Feldverformungselements und des Hohlleiters kann eine transversal-elektromagnetische (TEM) Mode der Mikrowellen existieren.

Das zumindest eine Feldverformungselement ist bevorzugt zylindrisch oder polygonal ausgebildet. Ferner kann das zumindest eine Feldverformungselement dazu ausgelegt sein, das Pultrudat durch den Hohlleiter zu führen. Zusätzlich kann das zumindest eine Feldverformungselement dazu ausgelegt sein, das Profil des Pultrudats zu formen. Mit anderen Worten das zumindest eine Feldverformungselement kann auch das Formelement sein. In diesem Zusammenhang kann das zumindest eine Feldverformungselement zum Beispiel eine axiale Ausnehmung oder axiale Durchgangsöffnung aufweisen, die so gestaltet ist, dass das Pultrudat mit einem Profil versehen wird, wenn es das zumindest eine Feldverformungselement durchquert oder durchläuft.

In der hier beschriebenen Ausführungsform ist die Pultrusionsrichtung vorzugsweise parallel zu der Ausbreitungsrichtung der Mikrowellen in dem Hohlleiter. Mit anderen Worten verläuft sie vorzugsweise koaxial zum Hohlleiter.

Durch die koaxiale Anordnung des zumindest einen Feldverformungselements und des Hohlleiters kann die Heizleistung der Mikrowellen auf einen sehr kleinen Raumbereich konzentriert werden, der sich in Pultrusionsrichtung nach dem zumindest einen Feldverformungselement befindet. Hierdurch können sehr kurze Längenabschnitte des Pultrudats erhitzt werden.

Außerdem kann das Werkzeug gemäß dieser Ausführungsform ein Formelement aufweisen, das koaxial zu dem Hohlleiter angeordnet ist. Das Formelement ist vorzugsweise scheibenförmig ausgebildet.

Weiter vorzugsweise sind das zumindest eine Feldverformungselement und das Formelement entlang der Pultrusionsrichtung axial hintereinander angeordnet, wobei insbesondere das Formelement in Pultrusionsrichtung nach dem zumindest einen Feldverformungselement angeordnet ist.

Das zumindest eine Feldverformungselement und das Formelement können in dieser Ausführungsform das Profil des Pultrudats formen.

Das zumindest eine Feldverformungselement und das Formelement können zu dem Hohlleiter koaxial angeordnet sein.

Gemäß einer weiteren bevorzugten Ausführungsform kann das Werkzeug zwei Feldverformungselemente aufweisen, wobei die zwei Feldverformungselemente jeweils elektrisch leitend sind, wobei sich die zwei Feldverformungselemente jeweils quer zu der Pultrusionsrichtung erstrecken. Das Werkzeug kann ferner ein Formelement aufweisen, das zwischen den zwei Feldverformungselementen angeordnet ist.

Vorteilhafterweise kann durch diese Ausführungsform eine homogene Erwärmung des auszuhärtenden Pultrudats in einem kleinen Raumbereich erreicht werden.

In dieser Ausführungsform können die zwei Feldverformungselemente zwei parallele Innenleiter sein, wobei der Hohlleiter ein Außenleiter sein kann. Die Pultrusionsrichtung ist vorzugsweise quer zur Ausbreitungsrichtung der Mikrowellen im Hohlleiter. Das Formelement kann sich quer zu den zwei Feldverformungselementen erstrecken. Es können auch mehr als zwei Feldverformungselemente sein.

In der beschriebenen Ausführungsform des Werkzeugs können aufgrund der Anordnung der zwei Feldverformungselemente zwei TEM-Moden der Mikrowellen im Hohlleiter existieren.

Gemäß der vorliegenden Erfindung kann das Werkzeug, insbesondere der Hohlleiter, derart gestaltet sein, dass die Ausbreitungsrichtung der Mikrowellen im Hohlleiter entweder senkrecht oder parallel zur Pultrusionsrichtung ausbreiten sein kann.

Des Weiteren kann das erfindungsgemäße Werkzeug ferner eine Mikrowellenquelle, insbesondere ein Magnetron oder eine geeignete Halbleiterquelle, umfassen. Die Mikrowellen können mittels einer der genannten Quellen von außerhalb des Hohlleiters in den Hohlleiter eingeleitet werden. Die Mikrowellen können aber auch innerhalb des Hohlleiters erzeugt und so in den Hohlleiter eingebracht bzw. eingeleitet werden.

Vorzugsweise ist die elektrische Feldverteilung der Mikrowellen die Feldverteilung einer stehenden Welle.

Vorzugsweise ist das Pultrudat ein mit einem Kunstharz durchtränkter Faserstrang oder umfasst einen mit einem Kunstharz durchtränkten Faserstrang.

Vorzugsweise ist das Halbzeug ein faserverstärktes Kunststoffbauteil.

Einzelmerkmale des vorbeschriebenen Aspekts und/oder der vorbeschriebenen bevorzugten Ausführungsformen können im Rahmen der vorliegenden Erfindung zu weiteren Ausführungsformen kombiniert werden

Ein weiterer erfindungsgemäßer Aspekt betrifft eine Verwendung eines Werkzeuges für die Herstellung von Halbzeugen aus einem Pultrudat mittels Pultrusion gemäß dem vorgenannten erfindungsgemäßen Aspekt.

Alle Merkmale, Ausführungsformen und Vorteile des oben beschriebenen Werkzeuges gemäß dem erfindungsgemäßen Aspekt können auf den obengenannten Aspekt der Verwendung übertragen werden.

Ein weiterer erfindungsgemäßer Aspekt betrifft ein Verfahren zur Herstellung eines Halbzeugs aus einem Pultrudat mittels Pultrusion, wobei das Verfahren folgende Schritte umfasst:
Bereitstellen eines Werkzeuges gemäß dem ersten erfindungsgemäßen Aspekt, Bereitstellen des Pultrudats,
Einführen des Pultrudats in das Werkzeug,
Einstellen eines Aushärtungsgrades des Pultrudats durch das Werkzeug mittels Mikrowellenheizung während der Pultrusion, und
Herausführen des Pultrudats mit dem eingestellten Aushärtungsgrad aus dem Werkzeug.

Vorteilhafterweise ermöglicht es das Verfahren ein Halbzeug mittels Pultrusion herzustellen, wobei der Aushärtungsgrad des Pultrudats während des Pultrusionsprozesses genau eingestellt und von 0 bis 100% variiert werden kann, sodass eine nachträgliche Umformung einfacher möglich ist.

Gemäß einer bevorzugten Ausführungsform des Verfahrens kann in einem ersten Schritt das erfindungsgemäße Werkzeug bereitgestellt werden.

In einem nächsten Schritt kann das Pultrudat bereitgestellt werden. Dies kann zum Beispiel dadurch geschehen, dass über ein Rollensystem ein Faserstrang aus beispielsweise Kohlenstofffasern und/oder Glasfasern und/oder Naturfasern und/oder Keramikfasern durch ein Becken mit flüssigem Kunstharz gezogen wird.

Danach kann, in einem weiteren Schritt, das bereitgestellte Pultrudat, welches sich in einem nicht ausgehärteten Zustand befindet, in das Werkzeug eingeführt werden, zum Beispiel indem das Pultrudat über einen Mechanismus in das Werkzeug hineingezogen wird. Danach kann das Pultrudat durch das Werkzeug durchgeführt werden, zum Beispiel indem das Pultrudat über einen weiteren oder den selben Mechanismus durch das Werkzeug durchgezogen wird.

In einem weiteren Schritt kann der Aushärtungsgrad des Pultrudats durch das Werkzeug mittels Mikrowellen eingestellt werden. Dies kann einschließen, dass ein durch das Werkzeug bestimmter Längenabschnitt des Pultrudats mittels der Mikrowellen geheizt wird. Hierzu können Mikrowellen in den Hohlleiter des Werkzeuges eingeleitet werden. Anders gesagt kann der Aushärtungsgrad des Pultrudats durch das Werkzeug mittels Mikrowellenheizung eingestellt werden.

Während der Pultrusion kann die Leistung der Mikrowellen gesteuert werden. Die Leistung kann erhöht oder erniedrigt werden. Sie kann auch ein- oder ausgeschaltet werden. Hierdurch kann der Aushärtungsgrad des Pultrudats noch genauer eingestellt werden. Das Pultrudat kann entlang seiner Längenausdehnung sogar mit einem Aushärtungsgradienten versehen werden, was die nachträgliche Verformung oder Umformung möglich macht. Ferner können voneinander getrennte Längenabschnitte des Pultrudats mit gleichen und/oder verschiedenen Aushärtungsgraden erzeugt werden.

So können zum Beispiel drei voneinander abgrenzbare Bereiche mit unterschiedlichen Aushärtungsgraden im Pultrudat erzeugt werden: unausgehärtet, noch verformbar und ausgehärtet.

In einem letzten Schritt kann das Pultrudat mit dem eingestellten Aushärtungsgrad aus dem Werkzeug herausgeführt werden, wodurch das herzustellende Halbzeug bereitgestellt werden kann.

Zusätzlich kann das Verfahren den Schritt einschließen, dass, nach dem Einstellen des Aushärtungsgrades des Pultrudats und/oder nach dem Herausführen des Pultrudats mit dem eingestellten Aushärtungsgrad aus dem Werkzeug, das Pultrudat mit dem eingestellten Aushärtungsgrad verformt oder umgeformt wird. Daran anschließend kann dann das herzustellende Halbzeug bereitgestellt werden.

Alle Merkmale, Ausführungsformen und Vorteile des oben beschriebenen Werkzeuges gemäß dem erfindungsgemäßen Aspekt können auf den obengenannten Aspekt des Verfahrens übertragen werden.

Im Folgenden werden besondere Ausführungsformen der vorliegenden Erfindung anhand der Figuren beschrieben.

Es zeigen:
- **Figur 1**: einen Längsschnitt einer ersten Ausführungsform des erfindungsgemäßen Werkzeuges,
- **Figur 2**: den Längsschnitt der ersten Ausführungsform nach Figur 1 mit eingezeichneter Verteilung des elektrischen Feldes,
- **Figur 3**: einen Querschnitt der ersten Ausführungsform nach Figur 1,
- **Figur 4**: den Querschnitt aus Figur 3 mit eingezeichneter elektrischer Feldverteilung,
- **Figur 5**: einen Querschnitt einer Abwandlung der ersten Ausführungsform,
- **Figur 6**: einen Querschnitt der Abwandlung der ersten Ausführungsform mit eingezeichneter Verteilung des elektrischen Feldes,
- **Figur 7**: einen Längsschnitt einer weiteren Abwandlung der ersten Ausführungsform nach Figur 1,
- **Figur 8**: der Längsschnitt nach Figur 7 mit eingezeichneter elektrischer Feldverteilung,
- **Figur 9**: einen Längsschnitt einer zweiten Ausführungsform des erfindungsgemäßen Werkzeuges,
- **Figur 10**: den Längsschnitt der zweiten Ausführungsform nach Figur 9 mit eingezeichneter Verteilung des elektrischen Feldes,
- **Figur 11**: einen Längsschnitt einer dritten Ausführungsform des erfindungsgemäßen Werkzeuges, und
- **Figur 12**: den Längsschnitt der dritten Ausführungsform nach Figur 11 mit eingezeichneter Verteilung des elektrischen Feldes.

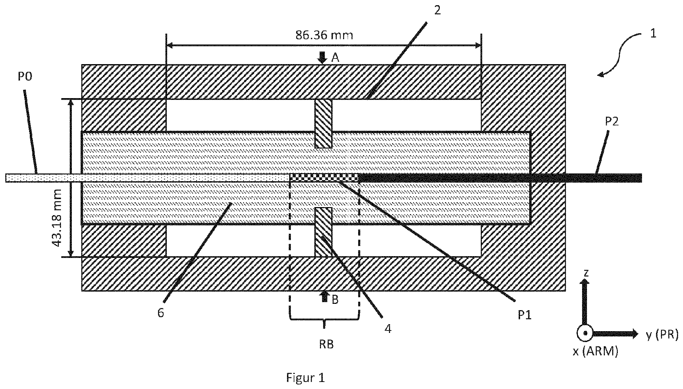

**Figur 1** zeigt einen Längsschnitt einer ersten Ausführungsform des erfindungsgemäßen Werkzeugs 1 entlang der Pultrusionsrichtung PR.

Die Pultrusionsrichtung PR und die Ausbreitungsrichtung der Mikrowellen ARM spannen ein orthogonales Koordinatensystem auf. Die Pultrusionsrichtung PR verläuft in der Zeichenebene, wobei die Ausbreitungsrichtung der Mikrowellen ARM aus der Zeichenebene herausragt. Die Ausbreitungsrichtung der Mikrowellen ARM kann die x-Achse des Koordinatensystems bilden und die Pultrusionsrichtung kann die y-Achse des Koordinatensystems bilden.

Das gezeigte Werkzeug bzw. der gezeigte Applikator 1 weist einen quaderförmigen, im Längsschnitt rechteckigen, Hohlleiter 2 auf. Innerhalb des Hohlleiters 2 ist ein einteilig ausgestaltetes Formelement 6 aus Glaskeramik angeordnet. Das Formelement 6 erstreckt sich entlang der Pultrusionsrichtung PR durch das Innere des Hohlleiters 2, sodass ein in das Werkzeug 1 eingeführtes Pultrudat P(0, 1, 2) das Innere des Hohlleiters 2 über das Formelement 6 vollständig durchquert oder durchläuft. Das Formelement 6 ist in die Außenwand des Hohlleiters 2 eingesetzt und führt das Pultrudat P von einer Seite des Hohlleiters 2 zur in Pultrusionsrichtung PR gegenüberliegenden Seite des Hohlleiters 2.

Der gezeigte Hohlleiter 2 hat Innenmaße von 86,36 mm Länge (in Pultrusionsrichtung PR) und 43,18 mm Höhe (in z-Richtung). Weitere Abmessungen sind möglich, diese hängen aber von der Wellenlänge bzw. Frequenz der Mikrowellen und/oder der Füllung des Hohlleiters 2 ab.

Der in Figur 1 dargestellte Applikator weist zudem zwei Feldverformungselemente 4, die als Stifte ausgebildet sind, auf. Die Feldverformungselemente 4 sind bevorzugt zentral angeordnet. Sie sind bevorzugt mittig innerhalb des Hohlleiters 2 angeordnet und springen von der Innenwand des Hohlleiters 2 in das Zentrum des Hohlleiters 2 vor. Die Feldverformungselemente können auch nicht zentral, außerhalb der Mitte des Hohlleiters 2 angeordnet sein. Über entsprechende Ausnehmungen in dem Formelement 6 können die von der Hohlleiterinnenwand vorspringenden Enden der Feldverformungselemente 4 von dem Formelement aufgenommen.

Durch die Anordnung der Feldverformungselemente 4 wird ein Raumbereich RB im Inneren des Hohlleiters 2 bestimmt, in dem oder auf dem sich der größte Teil der Leistung der Mikrowellen konzentriert, wenn zum Beispiel mittels einer Mikrowellenquelle (in den Figuren nicht gezeigt) in dem Hohlleiter Mikrowellen eingekoppelt werden. Der Raumbereich RB liegt zwischen den Feldverformungselementen 4 und die Ausdehnung des Raumbereichs RB in Pultrusionsrichtung bestimmt den Längenabschnitt P1 eines Pultrudats P, der bevorzugt erhitzt werden kann. Die Ausdehnung des Raumbereichs RB bestimmt zudem, wie kurz mögliche Übergänge mit unterschiedlichem Aushärtungsgrad des Pultrudats P eingestellt werden können. Der Aushärtegrad kann in diesem Bereich durch Variation der eingekoppelten Mikrowellenleistung eingestellt werden.

Im laufenden Pultrusionsprozess entstehen so drei Bereiche des Pultrudats P: ein Bereich, in dem das Pultrudat noch nicht erhitzt und nicht gehärtet ist (PO), ein Bereich, in dem das Pultrudat erhitzt und somit gehärtet wird (P1), wobei der Bereich P1 dem Raumbereich RB entspricht, sowie ein Bereich, in dem das Pultrudat P einen bestimmten Aushärtungsgrad oder Aushärtungsgradienten aufweist oder das Pultrudat vollständig ausgehärtet ist. Die Homogenität der Aushärtung des Pultrudats P im Bereich P1 hängt davon ab, wie schmal der Raumbereich RB durch Feldverformungselemente 4 gehalten werden kann und inwieweit sich die Leistung der Mikrowellen, insbesondere die komplette Leistung, fokussieren lässt. Je kleiner der Raumbereich RB durch Feldverformungselemente 4 ist, umso schärfer sind die Bereiche P0, P1 und P2 voneinander abgrenzbar. Der Übergang zwischen den Bereichen P0 und P1, P1 und P2 kann aber auch graduell sein. Mit anderen Worten der Übergang des Aushärtungsgrades in den Bereichen P0, P1 und P2 kann auch kontinuierlich sein.

"P" bezeichnet das Pultrudat im Allgemeinen, d. h. mit einem der obengenannten Aushärtungsgrade P0, P1 oder P2 oder einer Mischung aus P0, P1 und P2. "P" wird insbesondere für das Pultrudat verwendet, um zum Beispiel bei der Darstellung eines Querschnitts einer Ausführungsform der vorliegenden Erfindung die Lage und/oder Position des Pultrudats zu veranschaulichen. Das Pultrudat P kann beim Verlassen des erfindungsgemäßen Werkzeugs ausschließlich den Aushärtungsgrad P0 aufweisen. D. h. das Pultrudat P kann vollständig unausgehärtet sein. Das Pultrudat P kann aber auch beim Verlassen des erfindungsgemäßen Werkzeugs ausschließlich den Aushärtungsgrad P1 oder P2 aufweisen.

Da das Pultrudat den Bereich RB während des Pultrusionsprozesses in der Regel kontinuierlich durchläuft, ist die Aushärtung bei konstanter Mikrowellenleistung immer in Pultrusionsrichtung homogen. Die Breite des Raumbereichs beeinflusst vor allem die Auflösung der verschieden stark ausgehärteten Bereiche bei veränderlicher Mikrowellenleistung.

Im Folgenden wird die in Figur 1 gezeigte erste Applikatorvariante bzw. Ausführungsform des erfindungsgemäßen Werkzeuges nochmal kurz mit alternativen Formulierungen zusammengefasst und vorteilhafte Effekte werden erwähnt:
Die erste Applikatorvariante verwendet einen kurzgeschlossenen Rechteckhohlleiter 2, durch den, quer zur Leitungsrichtung der Mikrowellen ARM, ein Keramikformeinsatz 6 führt. Dieser dient zur Formgebung des Profils des Pultrudats bzw. fertigen Halbzeugs und verhindert gleichzeitig das Eindringen von flüssigem Harz in den restlichen Resonator 2. Die Laufrichtung PR der Fasern ist orthogonal zur Richtung des elektrischen Felds gewählt, um bei leitfähigen Fasern, wie. Beispielsweise Carbonfasern, dennoch eine gute Eindringtiefe der elektromagnetischen Welle zu erreichen. Oberhalb und unterhalb des Faserstrangs P ist ein Metallstift 4 eingebracht Dies sorgt aufgrund von Kanteneffekten für eine lokale Überhöhung der Feldstärke. Durch die Feldüberhöhung kann die Erwärmung des Profils größtenteils auf einen kurzen Bereich in der Mitte des Hohlleiters 2 beschränkt werden.

Folglich kann der Raumbereich RB sehr klein sein, wodurch das Pultrudat gezielt geheizt und somit auch gehärtet werden kann.

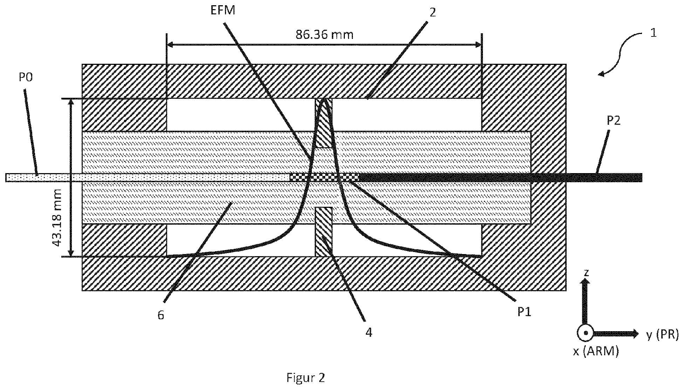

**Figur 2** zeigt den Applikator 1 aus Figur 1, wobei hier zusätzlich zur Anschauung die die durch die Metallstifte 4 verformte und auf den Raumbereich RB konzentrierte elektrische Feldverteilung der Mikrowellen EFM eingezeichnet ist.

An den Rändern des Hohlleiters 2 fällt die Verteilung auf Null, wohingegen die Verteilung in einem engen Bereich um die Metallstifte 4 spitz zuläuft bzw. einen schmalen "Peak" aufweist. Durch den schmalen Peak lässt sich der Raumbereich RB genau festlegen und bei der Einstellung von Übergängen mit unterschiedlichem Härtegrad diesen Übergang mit unterschiedlichem Aushärtungsgrad (P0, P2) präzise abgrenzen.

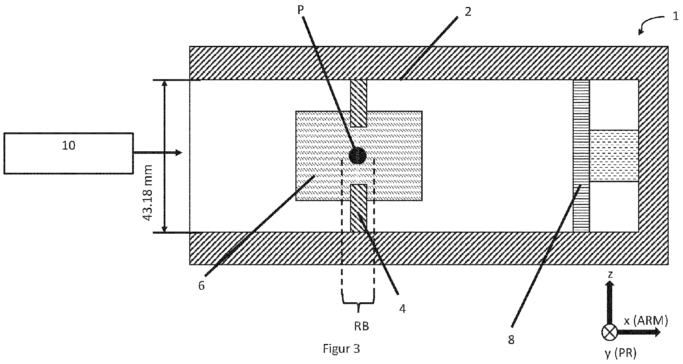

**Figur 3** zeigt einen Querschnitt der ersten Ausführungsform des Werkzeuges bzw. Applikators 1 nach Figur 1, Der gezeigte Querschnitt verläuft entlang der x-z-Ebene des eingezeichneten Koordinatensystems bzw. entlang der Linie AB in Figur 1.

Der Applikator 1 weist zusätzlich ein Anpasselement 8 auf, das als beweglicher Kurzschluss ausgebildet ist. Das bewegliche Anpasselement 8 ist verschiebbar, wodurch die elektrische Feldverteilung der Mikrowellen EFM in Ausbreitungsrichtung der Mikrowellen ARM an Veränderungen der dielektrischen Bedingungen innerhalb des Hohlleiters 2 angepasst werden kann und die Feldverteilung EFM noch weiter in dem Raumbereich RB fokussiert werden kann. Das Anpasselement 8 kann, wie gezeigt, eine Metallplatte im Inneren des Hohlleiters 2 sein, die sich in der y-z-Ebene erstreckt und senkrecht dazu, also in x-Richtung, verschiebbar ist.

Außerdem ist in Figur 3 gezeigt, dass die Mikrowellen über einen Mikrowelleneingang 10 in den Hohlleiter 2 eingeleitet werden können. Der Mikrowelleneingang 10 kann zum Beispiel ein für Mikrowellen transmissives Fenster sein.

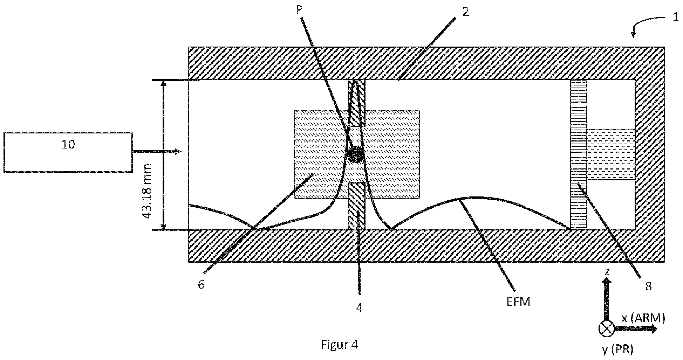

**Figur 4** zeigt die fokussierte elektrische Feldverteilung der Mikrowellen EFM. Man erkennt, dass die Maxima der stehenden Welle zu lokalen deformiert werden und ein erhöhtes globales Maximum in dem Bereich entsteht, der von dem Pultrudat P in Pultrusionsrichtung PR während der Pultrusion durchquert wird.

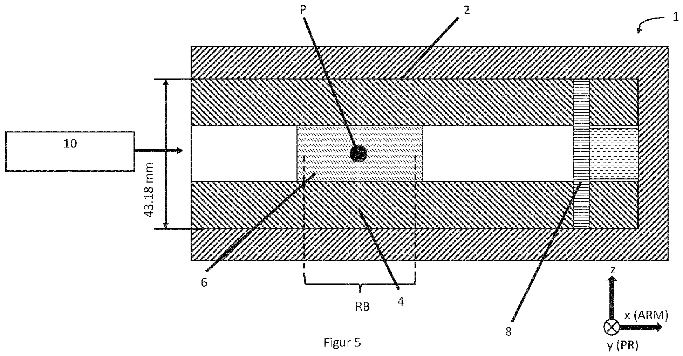

**Figur 5** zeigt einen Querschnitt einer Abwandlung der ersten Ausführungsform, der dem in den Figuren 3 und 4 gezeigten Querschnitt entspricht, wobei die Metallstifte 4 durch Metallstege 4 ersetzt worden sind. Die Metallstege sind so beschaffen, dass sie sich quer zur Pultrusionsrichtung PR bzw. entlang der Ausbreitungsrichtung der Mikrowellen im Hohlleiter ARM erstrecken. Die Stege 4 haben im gezeigten Querschnitt eine rechteckige Fläche. Das Formelement 6 weist entsprechende Ausnehmungen auf, um die Stege 4 aufzunehmen.

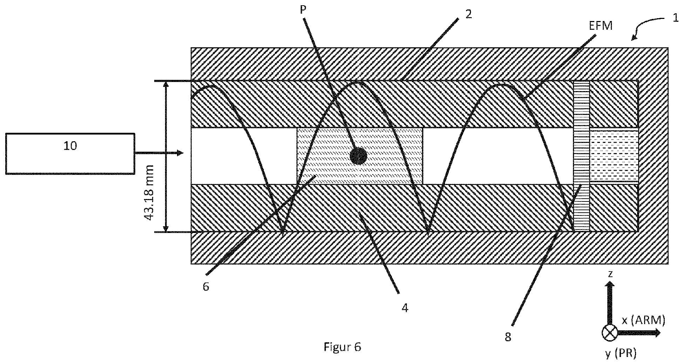

**Figur 6** zeigt die elektrische Feldverteilung EFM quer zur Pultrusionsrichtung PR bzw. in Ausbreitungsrichtung der Mikrowellen im Hohlleiter ARM im Beisein des Schiebers bzw. Anpasselements 8. Durch die stegförmig ausgebildeten Feldverformungselemente 4, die sich quer zur Pultrusionsrichtung PR erstrecken wird die Leistung der Mikrowellen, wie in Figur 2 gezeigt, hauptsächlich in Pultrusionsrichtung PR auf den Raumbereich RB konzentriert bzw. fokussiert. Quer zur Pultrusionsrichtung PR, also entlang der Ausbreitungsrichtung der Mikrowellen ARM, kann die Leistung der Mikrowellen jedoch im Raumbereich RB intensiviert werden, indem die stehende Welle der Mikrowellen mittels des Anpasselements 8 derart ausgerichtet wird, dass sich ein Maximum der stehenden Welle innerhalb des Raumbereichs RB befindet.

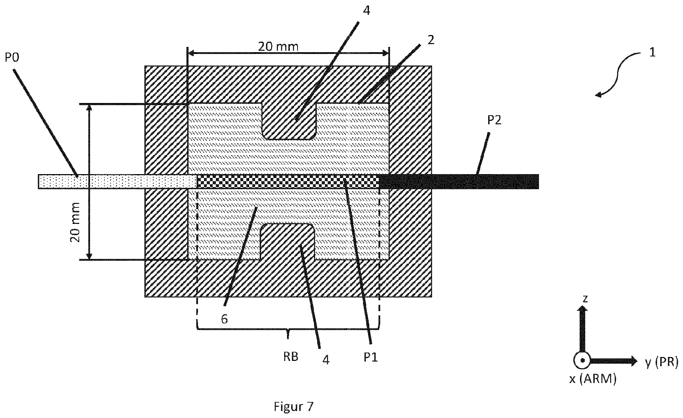

**Figur 7** zeigt einen Längsschnitt einer weiteren Abwandlung der ersten Ausführungsform des Werkzeuges bzw. Applikators 1 nach Figur 1.

In dieser Abwandlung des Applikators 1 wird ausgenutzt, dass durch das Einbringen von Stegen 4 in den Wellenleiter 2 dessen Cutoff-Frequenz reduziert wird. Die Keramik oder das Dielektrikum bzw. das Formelement 6, die bzw. das zur Führung der Fasern P und zur Profilformung zumindest einen Teil des Wellenleiters 2 ausfüllt, sorgt ebenso für ein Absenken der Cutoff-Frequenz. Daher ist der Hohlleiter 2 vollständig mit der Keramik 6 gefüllt.

Im keramikgefüllten Steghohlleiter 2 liegt die Cutoff-Frequenz deutlich niedriger als bei einem luftgefüllten Standardhohlleiter mit gleichen Außenmaßen. Dementsprechend kann der keramikgefüllte Steghohlleiter 2 wesentlich kompakter gebaut werden, was ebenfalls eine deutliche Reduzierung der Heizlänge und damit des Raumbereichs RB ermöglicht.

Der Hohlleiter 2 hat Innenabmessungen von 20 mm mal 20 mm (Länge mal Höhe). Der erhitzbare Raumbereich RB entspricht somit im Wesentlichen den Innenausmaßen des Hohlleiters quer zur Ausbreitungsrichtung der Mikrowellen in dem Hohlleiter ARM.

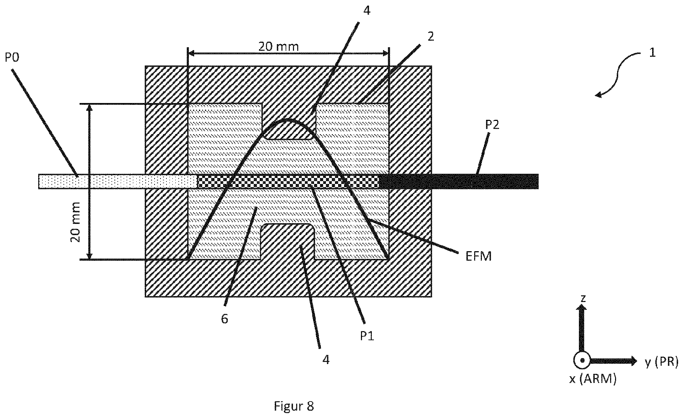

**Figur 8** zeigt das die E-Feldverteilung EFM in dem in Figur 7 gezeigten Werkzeug 1 quer zur Ausbreitungsrichtung der Mikrowellen ARM.

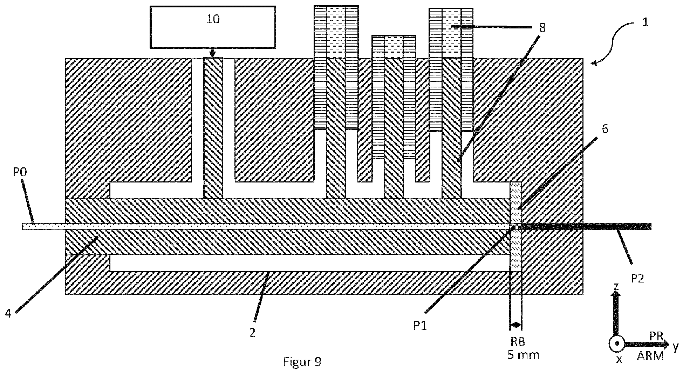

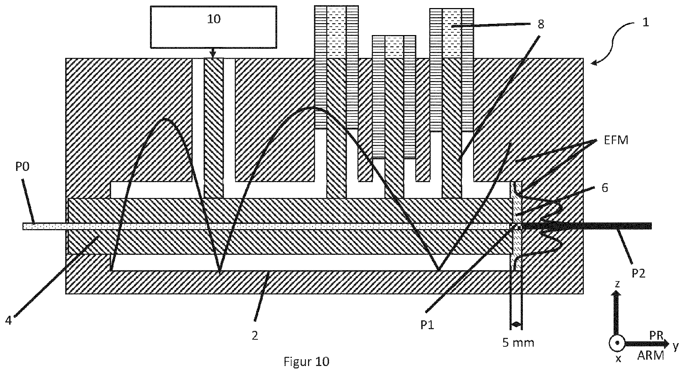

Die **Figur 9** und **Figur 10** zeigen einen Längsschnitt einer zweiten Ausführungsform des erfindungsgemäßen Werkzeuges 1, mit und ohne eingezeichneter E-Feldverteilung EFM.

Der Applikator 1 gemäß der zweiten Ausführungsform basiert auf einem überdimensionierten koaxialen Resonator 2. Ein Stahlkern 4, durch dessen Mitte das Pultrudat P geführt wird, dient gleichzeitig als Innenleiter und Feldverformungselement sowie als Formwerkzeug. An einem Ende des Resonators 2 befindet sich eine Keramikscheibe 6, die auf der einen Seite den Innenleiter 4 abschließt und auf der gegenüberliegenden Seite an der Endfläche des Außenleiters 2 anliegt. Die Keramikscheibe 6 dient zur Einkopplung der Mikrowellen in das zu härtende Material und gleichzeitig zur Profilformung. Da die elektrischen Felder immer senkrecht auf den metallischen Wänden des Innen- und Außenleiters 4, 2 stehen, ist das elektrische Feld in dem Applikator 1 parallel zur Laufrichtung PR der Fasern P, was bei stark leitfähigen Fasern P den Durchmesser des Profils aufgrund der geringeren Eindringtiefe limitiert und bei isolierenden Fasern die Mikrowellenabsorption im Vergleich zu senkrecht polarisiertem Feld verbessert. Durch die im koaxialen Resonator 2 existierende TEM-Mode der Mikrowellen kann die Länge der Keramikscheibe 6 beliebig kurz und damit die Länge der Heizzone bzw. des Raumbereichs RB beliebig kurz gewählt werden, ohne die Ausbreitungsfähigkeit der Mode zu beeinflussen. In der hier beschriebenen zweiten Ausführungsform des Applikators 1 liegt die Länge des Raumbereichs RB bei 5 mm.

Um den Applikator 1 optimal auf die dielektrischen Eigenschaften des auszuhärtenden Materials bzw. Pultrudats P einstellen zu können, befinden sich kurz hinter der Keramikscheibe 6 drei Anpasselemente 8 bestehend aus drei parallelen Koaxleitungen, die mit einem beweglichen Kurzschluss abgeschlossen sind. Die drei Anpasselemente 8 sind quer zur Pultrusionsrichtung verschiebbar. In Figur 9 und 10 sind die Anpasselemente 8 in z-Richtung verschiebbar. Da das auszuhärtende Material durch den Innenleiter 4 läuft, muss dieser aus dem Resonator 2 herausgeführt werden. Die Ankopplung. des Resonators 2 erfolgt dementsprechend über eine T-Verzweigung. Die Mikrowellen werden über einen Mikrowelleneingang 10 quer zur Längsausdehnung des Innenleiters 4 und quer zur Pultrusionsrichtung PR in den Hohlleiter 2 eingeführt.

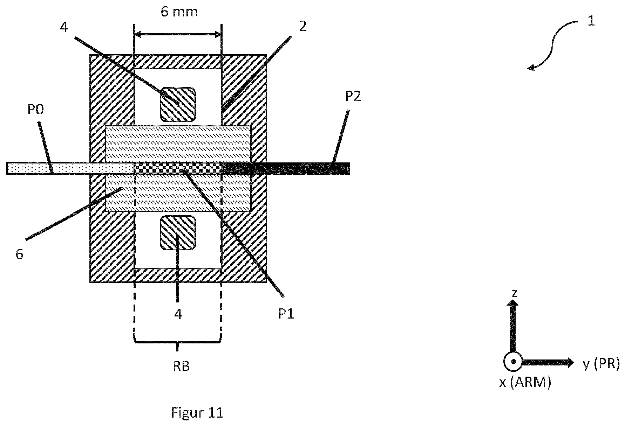

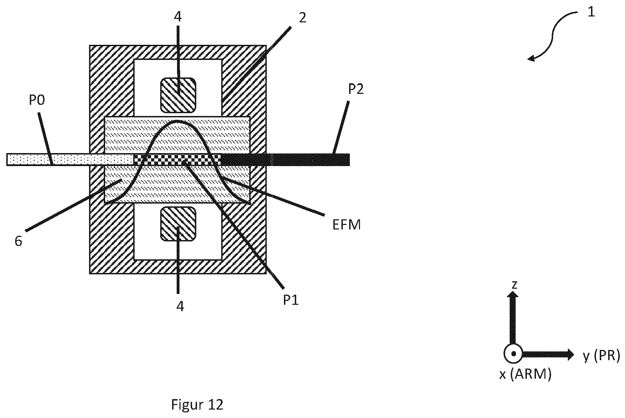

Die **Figur 11** und **Figur 12** zeigen einen Längsschnitt einer dritten Ausführungsform des erfindungsgemäßen Werkzeuges 1, mit und ohne eingezeichneter E-Feldverteilung der Mikrowellen EFM.

Der Applikator 1 gemäß der dritten Ausführungsform vereint die Vorteile der beiden zuvor genannten Applikatoren. Durch die Verwendung einer koaxialen Anordnung mit zwei Innenleitern 4, die als Feldverformungselemente fungieren, kann sowohl die TEM-Welle als auch die Feldorientierung orthogonal zum Faserverlauf bzw. zur Pultrusionsrichtung PR genutzt werden. Ähnlich wie in der ersten Ausführungsform des Applikators 1 verläuft ein Keramikformwerkzeug bzw. Keramikformelement 6 quer zur Ausbreitungsrichtung der Mikrowellen ARM. Der Keramikeinsatz 6 liegt mittig zwischen den beiden Innenleitern 4, um das Pultrudat P während der Aushärtung zu formen.

In dieser Leiteranordnung existieren zwei TEM-Moden. Da deren Ausbreitungsfähigkeit im Gegensatz zu den reinen Hohlleitermoden nicht von der Querschnittsgeometrie des Applikators 1 abhängt, können die Wände des Außenleiters 2 beliebig nahe beieinander liegen und so die Länge der Heizzone bzw. des Raumbereichs RB begrenzen. Die Länge der Heizzone bzw. des Raumbereichs RB liegt hier bei 6 mm.

Zusammengefasst ermöglicht es die vorliegende Erfindung, die Herstellung eines Halbzeugs aus einem Pultrudat mittels Pultrusion derart zu verbessern, dass der Aushärtungsgrad des Pultrudats gezielter eingestellt werden kann und nachträgliche Umformungen des Pultrudats einfacher möglich sind.

Insbesondere stellt die vorliegende Erfindung ein Werkzeug bereit, durch welches der Heizbereich der Mikrowellen, auf den sich die Leistung der Mikrowellen beschränkt, bzw. der Bereich, in dem das Pultrudat ausgehärtet wird, stark verkürzt wird. Der Heiz- bzw. Aushärtebereich wird auf einen sehr kleinen Raumbereich begrenzt. Hierdurch lassen sich Übergangbereiche von unterschiedlichen Aushärtungsgraden entlang des Pultrudats auf einen sehr kleinen Bereich einschränken, was eine präzise nachträgliche Verformung oder Umformung des Pultrudats ermöglichen kann. Durch das erfindungsgemäße Werkzeug kann das Pultrudat entlang seiner Längenausdehnungsrichtung mit einem großen Aushärtungsgradienten versehen werden. Ferner können voneinander getrennte Längenabschnitte des Pultrudats mit gleichen und/oder verschiedenen Aushärtungsgraden erzeugt werden. Des Weiteren lässt sich das Werkzeug kompakt bauen.

Weiter insbesondere stellt die vorliegende Erfindung ein Verfahren bereit, welches es ermöglicht, ein Halbzeug mittels Pultrusion auf verbesserte Art und Weise herzustellen, wobei der Aushärtungsgrad des Pultrudats während des Pultrusionsprozesses auf kurzen Strecken variiert, sodass eine nachträgliche Umformung von gezielt nicht ausgehärteten Bereichen möglich ist.

### Bezugszeichenliste

- 1: Werkzeug
- P: Pultrudat, Faserstrang
- P0, P1, P2: Bereiche unterschiedlicher Aushärtegrade des Pultrudats
- 2: Hohlleiter
- EFM: elektrische Feldverteilung der Mikrowellen
- PR: Pultrusionsrichtung
- 4: Feldverformungselement
- RB: Raumbereich
- 6: Formelement
- 8: Anpasselement
- ARM: Ausbreitungsrichtung der Mikrowellen
- 10: Mikrowelleneingang

## Patentansprüche

1. Werkzeug (1) für die Herstellung eines Halbzeugs aus einem Pultrudat (P) mittels Pultrusion, umfassend:
einen Hohlleiter (2) zur Leitung elektromagnetischer Mikrowellen, wobei das Pultrudat (P) in einer Pultrusionsrichtung (PR) in den Hohlleiter (2) einführbar ist, **gekennzeichnet durch** zumindest ein Feldverformungselement (4) zum Verformen der elektrischen Feldverteilung der Mikrowellen (EFM) in dem Hohlleiter (2),
wobei das zumindest eine Feldverformungselement (4) die elektrische Feldverteilung der Mikrowellen (EFM) in dem Hohlleiter derart verformt, dass die Leistung der Mikrowellen in einem von dem Pultrudat (P) in der Pultrusionsrichtung (PR) durchquerbaren Raumbereich (RB) im Inneren des Hohlleiters (2) intensiviert wird.

2. Werkzeug (1) nach Anspruch 1, wobei das zumindest eine Feldverformungselement (4) die elektrische Feldverteilung (EFM) derart verformt, dass die Feldstärke der Mikrowellen in dem Raumbereich (RB) überhöht wird, wobei insbesondere die Leistung der Mikrowellen im Wesentlichen in Pultrusionsrichtung auf den Raumbereich konzentriert wird.

3. Werkzeug (1) nach einem der vorangehenden Ansprüche,
wobei das Werkzeug (1) ferner ein Formelement (6) zur Profilformung des Halbzeugs umfasst, wobei das Formelement (6) zumindest in einem Teilbereich des Hohlleiters (2) angeordnet ist, und/oder
wobei das Werkzeug (1) ferner zumindest ein Anpasselement (8) zum Anpassen der elektrischen Feldverteilung der Mikrowellen (EFM) im Inneren des Hohlleiters (2) an eine Veränderung der dielektrischen Eigenschaften im Inneren des Hohlleiters (2) umfasst, und/oder
wobei der Hohlleiter (2) quaderförmig oder zylindrisch oder polygonal ist, und/oder
wobei der Hohlleiter (2) ein Mikrowellenhohlraumresonator ist, und/oder
wobei das Material, aus dem der Hohlleiter (2) und/oder das zumindest eine Feldverformungselement (4) geformt ist, Metall, insbesondere Aluminium oder Messing oder Stahl, umfasst.

4. Werkzeug (1) nach einem der vorangehenden Ansprüche, wobei das zumindest eine Feldverformungselement (4) stiftförmig oder stegförmig ausgebildet ist, und/oder
wobei die Pultrusionsrichtung (PR) quer zu der Ausbreitungsrichtung der Mikrowellen (ARM) in dem Hohlleiter (2) ist.

5. Werkzeug (1) nach Anspruch 3, wobei das zumindest eine Feldverformungselement (4) und das Formelement (6) koaxial zu dem Hohlleiter (2) angeordnet sind, wobei das zumindest eine Feldverformungselement (4) entlang der Pultrusionsrichtung (PR) elektrisch leitend ist,

6. Werkzeug (1) nach Anspruch 3 oder 5, wobei das zumindest eine Feldverformungselement (4) zylindrisch oder polygonal ausgebildet ist und das Formelement (6) scheibenförmig ausgebildet ist.

7. Werkzeug (1) nach einem der Ansprüche 3, 5 oder 6 , wobei das zumindest eine Feldverformungselement (4) und das Formelement (6) entlang der Pultrusionsrichtung (PR) axial hintereinander angeordnet sind, wobei insbesondere das Formelement (6) in Pultrusionsrichtung (PR) nach dem zumindest einen Feldverformungselement (4) angeordnet ist.

8. Werkzeug (1) nach einem der Ansprüche 3 oder 5 bis 7, wobei die Pultrusionsrichtung (PR) parallel zu der Ausbreitungsrichtung der Mikrowellen (ARM) in dem Hohlleiter (2) ist.

9. Werkzeug (1) nach Anspruch 3 oder 4, wobei das Werkzeug (1) zwei Feldverformungselemente (4) aufweist, wobei die zwei Feldverformungselemente (4) jeweils elektrisch leitend sind, wobei sich die zwei Feldverformungselemente (4) jeweils quer zu der Pultrusionsrichtung (PR) erstrecken, und wobei das Formelement (6) zwischen den zwei Feldverformungselementen (4) angeordnet ist.

10. Werkzeug (1) nach einem der vorangehenden Ansprüche, wobei das Pultrudat (P) einen mit einem Kunstharz durchtränkten Faserstrang umfasst, und/oder wobei das Halbzeug ein faserverstärktes Kunststoffbauteil ist.

11. Verwendung eines Werkzeuges (1) nach einem der vorangehenden Ansprüche für die Herstellung von Halbzeugen aus einem Pultrudat (P) mittels Pultrusion.

12. Verfahren zur Herstellung eines Halbzeugs aus einem Pultrudat (P) mittels Pultrusion, wobei das Verfahren folgende Schritte umfasst:
Bereitstellen eines Werkzeuges (1) nach einem der Ansprüche 1 bis 10,
Bereitstellen des Pultrudats (P, P0),
Einführen des Pultrudats (P, P0) in das Werkzeug (1),
Einstellen eines Aushärtungsgrades (P0, P1, P2) des Pultrudats (P) durch das Werkzeug (1) mittels Mikrowellen während der Pultrusion, und
Herausführen des Pultrudats (P) mit dem eingestellten Aushärtungsgrad (P0, P1, P2) aus dem Werkzeug (1).

13. Verfahren nach Anspruch 12, wobei das Einstellen des Aushärtungsgrades (P0, P1, P2) des Pultrudats (P) einschließt:
Heizen eines durch das Werkzeug (1) bestimmten Längenabschnitts des Pultrudats (P) mittels der Mikrowellen.

14. Verfahren nach Anspruch 12 oder 13, wobei das Einstellen des Aushärtungsgrades (P0, P1, P2) des Pultrudats (P) einschließt:
Einleiten der Mikrowellen in den Hohlleiter (2) des Werkzeuges (1).

15. Verfahren nach einem der Ansprüche 12 bis 14, wobei das Verfahren ferner einschließt:
nach dem Einstellen des Aushärtungsgrades (P0, P1, P2) des Pultrudats (P) und/oder nach dem Herausführen des Pultrudats (P) mit dem eingestellten Aushärtungsgrad (P0, P1, P2) aus dem Werkzeug (1), Verformen des Pultrudats (P) mit dem eingestellten Aushärtungsgrad (P0, P1, P2).

## Claims

1. Tool (1) for the production of a semifinished product from a pultrudate (P) by means of pultrusion, comprising:
a waveguide (2) for guiding electromagnetic microwaves, wherein the pultrudate (P) can be introduced into the waveguide (2) in a pultrusion direction (PR),
**characterised by**
at least one field-shaping element (4) for shaping the electric field distribution of the microwaves (EFM) in the waveguide (2),
wherein the at least one field-shaping element (4) shapes the electric field distribution of the microwaves (EFM) in the waveguide in such a way that the power of the microwaves is intensified in a spatial region (RB) in the interior of the waveguide (2) that can be traversed by the pultrudate (P) in the pultrusion direction (PR).

2. Tool (1) according to claim 1, wherein the at least one field-shaping element (4) shapes the electric field distribution (EFM) in such a way that the field strength of the microwaves in the spatial region (RB) is increased, wherein, in particular, the power of the microwaves is essentially concentrated in the direction of pultrusion on the spatial region.

3. Tool (1) according to one of the preceding claims,
wherein the tool (1) further comprises a shaping element (6) for shaping the profile of the semifinished product, wherein the shaping element (6) is arranged in at least one partial region of the waveguide (2), and/or
wherein the tool (1) further comprises at least one adjusting element (8) for adjusting the electric field distribution of the microwaves (EFM) inside the waveguide (2) to a change in the dielectric properties inside the waveguide (2), and/or
wherein the waveguide (2) is rectangular or cylindrical or polygonal, and/or
wherein the waveguide (2) is a microwave cavity resonator, and/or
wherein the material from which the waveguide (2) and/or the at least one field-shaping element (4) is formed, comprises metal, in particular aluminium or brass or steel.

4. Tool (1) according to one of the preceding claims, wherein the at least one field-shaping element (4) is pin-shaped or bar-shaped, and/or
wherein the pultrusion direction (PR) is transverse to the propagation direction of the microwaves (ARM) in the waveguide (2).

5. Tool (1) according to claim 3, wherein the at least one field-shaping element (4) and the shaping element (6) are arranged coaxially to the waveguide (2), wherein the at least one field-shaping element (4) is electrically conductive along the pultrusion direction (PR).

6. Tool (1) according to claim 3 or 5, wherein the at least one field-shaping element (4) is cylindrical or polygonal and the shaping element (6) is disc-shaped.

7. Tool (1) according to one of claims 3, 5 or 6, wherein the at least one field-shaping element (4) and the shaping element (6) are arranged axially one behind the other along the pultrusion direction (PR), wherein, in particular, the shaping element (6) is arranged behind the at least one field-shaping element (4) in the pultrusion direction (PR).

8. Tool (1) according to one of claims 3 or 5 to 7, wherein the pultrusion direction (PR) is parallel to the propagation direction of the microwaves (ARM) in the waveguide (2).

9. Tool (1) according to claim 3 or 4, wherein the tool (1) has two field-shaping elements (4), wherein the two field-shaping elements (4) are each electrically conductive, wherein the two field-shaping elements (4) each run transverse to the pultrusion direction (PR), and wherein the shaping element (6) is arranged between the two field-shaping elements (4).

10. Tool (1) according to one of the preceding claims, wherein the pultrudate (P) comprises a fibre strand impregnated with a synthetic resin, and/or
wherein the semifinished product is a fibre-reinforced plastic component.

11. Use of a tool (1) according to one of the preceding claims for the production of semifinished products from a pultrudate (P) by means of pultrusion.

12. Method for the production of a semifinished product from a pultrudate (P) by means of pultrusion, wherein the method comprises the following steps:
providing a tool (1) according to claims 1 to 10,
providing the pultrudate (P, P0),
introducing the pultrudate (P, P0) into the tool (1),
setting a degree of curing (P0, P1, P2) of the pultrudate (P) by the tool (1) by means of microwaves during pultrusion, and
discharging the pultrudate (P) with the set degree of curing (P0, P1, P2) out of the tool (1).

13. Method according to claim 12, wherein the setting of the degree of curing (P0, P1, P2) of the pultrudate (P) includes:
heating a length section of the pultrudate (P) determined by the tool (1) by means of the microwaves.

14. Method according to claim 12 or 13, wherein the setting of the degree of curing (P0, P1, P2) of the pultrudate (P) includes:
introducing the microwaves into the waveguide (2) of the tool (1).

15. Method according to one of claims 12 to 14, wherein the method further includes:
after the setting of the degree of curing (P0, P1, P2) of the pultrudate (P) and/or after the discharging the pultrudate (P) with the set degree of curing (P0, P1, P2) out of the tool (1), shaping the pultrudate (P) with the set degree of curing (P0, P1, P2).

## Revendications

1. Outil (1) pour la fabrication d'un produit semi-fini à partir d'un matériau pultrudé (P) par pultrusion, comprenant :
un guide d'ondes (2) pour conduire des micro-ondes électromagnétiques, le matériau pultrudé (P) pouvant être introduit dans le guide d'ondes (2) dans une direction de pultrusion (PR),
**caractérisé par**
au moins un élément de déformation de champ (4) pour déformer la distribution du champ électrique des micro-ondes (EFM) dans le guide d'ondes (2),
où l'au moins un élément de déformation de champ (4) déforme la distribution du champ électrique des micro-ondes (EFM) dans le guide d'ondes de telle sorte que la puissance des micro-ondes soit intensifiée dans une zone spatiale (RB) à l'intérieur du guide d'ondes (2) pouvant être traversée par le matériau pultrudé (P) dans la direction de pultrusion (PR).

2. Outil (1) selon la revendication 1, où l'au moins un élément de déformation de champ (4) déforme la distribution du champ électrique (EFM) de telle sorte que l'intensité du champ des micro-ondes dans la zone spatiale (RB) soit augmentée, où la puissance des micro-ondes est notamment concentrée essentiellement dans la direction de pultrusion sur la zone spatiale.

3. Outil (1) selon l'une quelconque des revendications précédentes,
où l'outil (1) comprend en outre un élément de formage (6) pour le formage de profil du produit semi-fini, où l'élément de formage (6) est agencé au moins dans une zone partielle du guide d'ondes (2), et/ou
où l'outil (1) comprend en outre au moins un élément d'adaptation (8) pour adapter la distribution du champ électrique des micro-ondes (EFM) à l'intérieur du guide d'ondes (2) à une modification des propriétés diélectriques à l'intérieur du guide d'ondes (2), et/ou
où le guide d'ondes (2) est parallélépipédique ou cylindrique ou polygonal, et/ou
où le guide d'ondes (2) est un résonateur à cavité micro-ondes, et/ou
où le matériau à partir duquel le guide d'ondes (2) et/ou l'au moins un élément de déformation de champ (4) est formé comprend du métal, notamment de l'aluminium ou du laiton ou de l'acier.

4. Outil (1) selon l'une quelconque des revendications précédentes, où l'au moins un élément de déformation de champ (4) est réalisé en forme de tige ou en forme de nervure, et/ou
où la direction de pultrusion (PR) est transversale à la direction de propagation des micro-ondes (ARM) dans le guide d'ondes (2).

5. Outil (1) selon la revendication 3, où l'au moins un élément de déformation de champ (4) et l'élément de formage (6) sont agencés coaxialement au guide d'ondes (2), où l'au moins un élément de déformation de champ (4) est électriquement conducteur le long de la direction de pultrusion (PR).

6. Outil (1) selon la revendication 3 ou 5, où l'au moins un élément de déformation de champ (4) est réalisé sous forme cylindrique ou polygonale et l'élément de formage (6) est réalisé en forme de disque.

7. Outil (1) selon l'une quelconque des revendications 3, 5 ou 6, où l'au moins un élément de déformation de champ (4) et l'élément de formage (6) sont agencés axialement l'un derrière l'autre le long de la direction de pultrusion (PR), où l'élément de formage (6) est notamment agencé dans la direction de pultrusion (PR) après l'au moins un élément de déformation de champ (4).

8. Outil (1) selon l'une quelconque des revendications 3 ou 5 à 7, où la direction de pultrusion (PR) est parallèle à la direction de propagation des micro-ondes (ARM) dans le guide d'ondes (2).

9. Outil (1) selon la revendication 3 ou 4, où l'outil présente deux éléments de déformation de champ (4), où les deux éléments de déformation de champ (4) sont chacun électriquement conducteurs, où les deux éléments de déformation de champ (4) s'étendent chacun transversalement à la direction de pultrusion (PR), et où l'élément de formage (6) est agencé entre les deux éléments de déformation de champ (4).

10. Outil (1) selon l'une quelconque des revendications précédentes, où le matériau pultrudé (P) comprend un toron de fibres imprégné d'une résine synthétique, et/ou
où le produit semi-fini est un composant en matière plastique renforcé de fibres.

11. Utilisation d'un outil (1) selon l'une quelconque des revendications précédentes pour la fabrication de produits semi-finis à partir d'un matériau pultrudé (P) par pultrusion.

12. Procédé de fabrication d'un produit semi-fini à partir d'un matériau pultrudé (P) par pultrusion, le procédé comprenant les étapes suivantes :
la fourniture d'un outil (1) selon l'une quelconque des revendications 1 à 10,
la fourniture du matériau pultrudé (P, P0),
l'introduction du matériau pultrudé (P, P0) dans l'outil (1),
le réglage d'un degré de durcissement (P0, P1, P2) du matériau pultrudé (P) par l'outil (1) au moyen de micro-ondes pendant la pultrusion, et
la sortie du matériau pultrudé (P) avec le degré de durcissement réglé (P0, P1, P2) de l'outil (1).

13. Procédé selon la revendication 12, où le réglage du degré de durcissement (P0, P1, P2) du matériau pultrudé (P) comprend :
le chauffage d'une section longitudinale du matériau pultrudé (P) déterminée par l'outil (1) au moyen des micro-ondes.

14. Procédé selon la revendication 12 ou 13, où le réglage du degré de durcissement (P0, P1, P2) du matériau pultrudé (P) comprend :
l'introduction des micro-ondes dans le guide d'ondes (2) de l'outil (1).

15. Procédé selon l'une quelconque des revendications 12 à 14, où le procédé comprend en outre :
après le réglage du degré de durcissement (P0, P1, P2) du matériau pultrudé (P) et/ou après la sortie du matériau pultrudé (P) avec le degré de durcissement réglé (P0, P1, P2) de l'outil (1), la déformation du matériau pultrudé (P) avec le degré de durcissement réglé (P0, P1, P2).
